# EUROPÄISCHE PATENTANMELDUNG

(11) **EP 2 476 736 A1**
(43) Veröffentlichungstag der Anmeldung: **18.07.2012**
(21) Anmeldenummer: 11150778.6
(22) Anmeldetag: 12.01.2011
(51) Int. Cl.: C09K 5/06, F28D 20/00, F28F 19/00

(54) **Latentwärmespeicher mit Korrosionsschutzpolster**

(71) Anmelder: Gebr. Bruns GmbH, 26683 Saterland (DE)
(72) Erfinder: Bruns, Heinrich, 26683 Saterland (DE); Buchholz, Jörg, 48282 Emsdetten (DE)
(74) Vertreter: Habbel, Ludwig

(57) **Zusammenfassung**

Bei einem Wärmespeicher, mit einem Behälter, und einem in dem Behälter vorgesehenen, die Wärme speichernden, flüssigen Speichermedium, wobei das Speichermedium den Behälter nur teilweise füllt, schlägt die Erfindung vor, dass der Behälter aus einem korrosionsanfälligen Material besteht, und oberhalb des Speichermediums ein Fluidpolster vorgesehen ist, dessen Fluid ein geringeres spezifisches Gewicht aufweist als das Speichermedium und korrosionshemmende Eigenschaften aufweist.

## Beschreibung

Die Erfindung betrifft einen Wärmespeicher nach dem Oberbegriff des Anspruchs 1.

Derartige Wärmespeicher werden in Heizungsanlagen verwendet und dienen beispielsweise dazu, von einer Solaranlage eingespeicherte Wärme zu speichern.

In der Praxis treten dabei Temperaturen des Speichermediums auf, die von etwa 10 °C bis etwa 95 °C reichen, so dass aufgrund dieser Temperaturschwankungen der Füllstand des Speichermediums im Behälter schwankt. Je nach verwendetem Speichermedium und dessen thermischem Ausdehnungskoeffizienten sind beispielsweise in dem genannten Temperaturbereich Volumenschwankungen von 11 % oder mehr üblich.

Das für den Behälter verwendete Material muss selbstverständlich gegenüber dem verwendeten Speichermedium beständig sein. Problematisch kann allerdings der Bereich sein, in dem die Volumenschwankungen stattfinden, also ein Bereich des Behälters, der abwechselnd von dem flüssigen Speichermedium benetzt ist und dann wieder trocken fällt. In speziell diesen Bereichen des Behälters kann das Problem auftauchen, dass je nach Eigenschaften des flüssigen Speichermediums die Behälterwand stark angegriffen wird, nämlich, wenn der zuvor benetzte und anschließend trocken gefallene Bereich der Behälterwand dem Luftsauerstoff ausgesetzt ist. In diesem Fall können Reaktionen stattfinden, welche den Behälter in diesem Bereich in erheblichem Maße angreifen.

Die vorgeschilderte Problematik tritt beispielsweise bei metallischen Behältern auf, wenn diese aus preisgünstigen korrosionsanfälligen Materialien wie Stahl hergestellt werden. Es sind bereits Vorschläge bekannt geworden, die Behälter aus korrosionsbeständigen Materialien herzustellen, beispielsweise aus einem entsprechenden korrosionsbeständigen Edelstahl, aber auch die Behälter aus Kalknatronglas herzustellen oder aus Kunststoffen, wie beispielsweise Plexiglas. Edelstahl ist erheblich teurer als einfacher Stahl, Kalknatronglas bewirkt aufgrund der erforderlichen Wandstärken sehr schwere und damit ebenfalls teure Behälter und ist zudem mechanisch empfindlich, beispielsweise gegenüber Stößen und Schlägen. Kunststoffe zu verwenden bedeutet angesichts des eingangs genannten Temperaturbereichs, dass die Behälter Stabilitätsprobleme aufweisen können, wenn sie auf Temperaturen von mehr als 80°C oder 90°C aufgeheizt werden. Soll diesen Stabilitätsproblemen durch entsprechende Verstärkungen, Aussteifungen oder Materialstärken der Behälterwand begegnet werden, so resultiert daraus wieder ein sehr schwerer und damit teurer Behälter.

Der Erfindung liegt die Aufgabe zugrunde, einen gattungsgemä-βen Wärmespeicher dahingehend zu verbessern, dass dieser möglichst preisgünstig herstellbar ist und eine gute Beständigkeit auch dann aufweist, wenn das vorgesehene Speichermedium korrosionsfördernde Eigenschaften aufweist.

Diese Aufgabe wird durch einen Wärmespeicher mit den Merkmalen des Anspruchs 1 gelöst.

Die Erfindung schlägt mit anderen Worten vor, den Behälter überraschend aus einem korrosionsanfälligen Material zu schaffen. Der vorliegende Vorschlag geht dabei von der Überlegung aus, dass dort, wo das Speichermedium ständigen Kontakt zur Behälterwand aufweist, keine Korrosion auftreten wird, da an diesen Stellen der Sauerstoff, der die Korrosion fördert, keinen Zugang zu der vom Speichermedium benetzten Behälterwand hat. Lediglich in dem Bereich des Behälters, der durch Dämpfe des Speichermediums oder aufgrund des schwankenden Flüssigkeitsspiegels des Speichermediums sowohl von dem Speichermedium benetzt wird als auch dem Luftsauerstoff zugänglich wäre, tritt das Korrosionsproblem auf. Daher schlägt der vorliegende Vorschlag weiterhin vor, oberhalb des Speichermediums ein Fluidpolster vorzusehen, welches korrosionshemmende Eigenschaften aufweist, also beispielsweise sauerstoffarm oder sauerstofffrei ist, und welches ein geringeres spezifisches Gewicht aufweist als das Speichermedium, so dass zuverlässig sichergestellt ist, dass dieses korrosionshemmende Fluidpolster stets oberhalb des Speichermediums verbleibt und die dort vorgesehenen Abschnitte des Behälters vor dem Sauerstoffzutritt schützt.

Das korrosionshemmende Fluidpolster kann bei thermischer Ausdehnung des flüssigen Speichermediums beispielsweise in einen externen Überlaufbehälter gedrückt werden. Der eigentliche Speicherbehälter kann somit in an sich bekannter Weise unverändert hergestellt werden und mit dem vorgesehenen Speichervolumen genutzt werden. Er wird dann, um vorschlagsgemäß ausgestaltet zu werden und Platz für das Korrosionsschutzfluid oberhalb es Speichermediums zu bieten, lediglich um den Überlaufbehälter ergänzt. Somit können standardisierte Behälter wirtschaftlich in großer Stückzahl hergestellt werden und dann - beispielsweise je nachdem, welches Speichermedium verwendet werden soll - wahlweise herkömmlich oder vorschlagsgemäß ausgestaltet werden.

Das im Fluidpolster vorgesehene Fluid kann vorteilhaft Öl enthalten, welches ohnehin passivierende bzw. korrosionsschützende Eigenschaften aufweist. Zudem verhindert es, dass das flüssige Speichermedium Gase bildet, die sich oberhalb des Flüssigkeitsspiegels des Speichermediums an der Behälterwand niederschlagen und dort die Korrosion fördern können.

Beispielsweise kann das im Fluidpolster vorgesehene Fluid nicht nur Öl als eine vergleichsweise geringe Teilmenge enthalten, sondern das Öl kann als alleiniger Bestandteil das korrosionshemmende Fluid bilden. Oder es kann als Hauptbestandteil des Fluids vorgesehen sein - beispielsweise zu einem Anteil von wenigstens 80% - und hinzu kommen lediglich kleinere Anteile von Additiven, welche die Eigenschaften des korrosionshemmenden Fluids positiv beeinflussen, z. B. hinsichtlich der Alterungsbeständigkeit bzw. Langzeitstabilität des Öls.

Wenn das korrosionshemmende Fluid Öl enthält, kann vorgesehen sein, dass dieses Fluid den Behälter oberhalb des Speichermediums nicht komplett ausfüllt, sondern diesen Bereich des Behälters lediglich teilweise ausfüllt, also nur eine Schwimmschicht bildet, die auf dem flüssigen Speichermedium aufschwimmt. Wenn aufgrund der thermischen Ausdehnung der Flüssigkeitsspiegel des Speichermediums ansteigt, wird auch die Schwimmschicht mit angehoben, so dass das Fluid einschließlich des Öls die Behälterwände benetzt, bevor der ansteigende Flüssigkeitsspiegel des Speichermediums diese höheren Abschnitte der Behälterwände erreicht. Wenn später der Flüssigkeitsspiegel des sich abkühlenden Speichermediums absinkt, so folgt dem absinkenden Flüssigkeitspegel auch die Schwimmschicht nach unten, die auf dem Speichermedium aufschwimmt, so dass auch in diesem Fall das Fluid einschließlich des Öls die Behälterwände benetzt und vor Korrosion schützt.

Die Verwendung von Öl im korrosionshemmenden Fluidpolster kann insbesondere vorgesehen sein, wenn der Wärmespeicher als offenes System ausgestaltet ist, wobei ein ausschließlich aus Öl bestehendes Korrosionsschutzfluid vorgesehen sein kann, welches den Behälter vollständig ausfüllt und bei den Pegelschwankungen des Speichermediums ggf. nach oben aus dem Behälter herausgedrückt wird und beispielsweise in einen Ausgleichsbehälter gedrückt wird, aus dem es später, wenn der Flüssigkeitsspiegel des Speichermediums im Wärmespeicher wieder absinkt, wieder zurückströmt, um die nicht vom flüssigen Speichermedium benetzten Bereiche der Behälterwand vollständig abzudecken und den Behälter oberhalb des flüssigen Speichermediums vollständig auszufüllen.

Bei Verwendung von Öl im korrosionshemmenden Fluidpolster ist jedoch auch die Möglichkeit gegeben, den Behälter als geschlossenen Behälter auszugestalten, so dass der Zutritt von Luftsauerstoff in den Behälter vermieden wird. Auch ohne einen externen Überlaufbehälter können nämlich die thermischen Schwankungen des flüssigen Speichermediums aufgefangen werden, indem ein komprimierbares Gaspolster oberhalb der Schwimmschicht vorgesehen ist. Den Behälter so auszugestalten, dass er die dabei auftretenden Druckschwankungen aufnehmen kann, ist bei einem Stahlbehälter problemlos möglich.

Weiterhin kann vorgesehen sein, dass das korrosionshemmende Fluid ein sauerstoffarmes oder ein sauerstofffreies Gas enthält. Durch die Verwendung eines Gases als kompressibles Medium kann bei Verwendung eines derartigen Fluids der Wärmespeicher als geschlossenes System ausgestaltet sein, so dass das Gaspolster oberhalb des flüssigen Speichermediums bei Ausdehnung des Speichermediums komprimiert werden kann, ohne dass es zusätzliche Leitungen, Ausgleichsbehälter o. dgl. bedarf. Bei Ausgestaltung als geschlossenes System ist zudem der Zutritt von zusätzlichem Sauerstoff in dieses System ausgeschlossen, so dass bei Verwendung eines sauerstoffarmen Gases dieser zunächst im Gas vorhandene Sauerstoff ggf. aufgezehrt werden kann, indem eine leichte Oberflächenkorrosion der Behälterwand zugelassen wird. Nach Verbrauch dieses Sauerstoffanteils kann jedoch keine weitere Korrosion auftreten, so dass das nun sauerstofffreie Gas den gewünschten Korrosionsschutz bietet. Bei Ausgestaltung als offenes System kann der Zutritt von zusätzlichem Sauerstoff in dieses System dadurch erschwert werden, dass das gasförmige Fluid schwerer als Luft ist, so dass es wie die oben erwähnte Schwimmschicht stets auf der darunter befindlichen Flüssigkeit verbleibt. In diesem Fall ist der Behälter und / oder ein externer Ausgleichsbehälter so bemessen, dass auch bei maximaler thermischer Ausdehnung das korrosionshemmende Gas stets in diesem Behältersystem verbleibt und nicht oben daraus überströmen und aus dem Behältersystem herausströmen kann.

Das korrosionshemmende Fluid kann auch als Mischung aus einem flüssigen und einem gasförmigen Fluid zusammengesetzt sein: beide genannten Fluide, nämlich ein Öl und ein sauerstoffarmes oder ein sauerstofffreies Gas können gemeinsam verwendet werden, so dass das Öl die erwähnten Vorteile der Schwimmschicht auf dem Speichermedium bietet und das Gas in dem Raum oberhalb der Schwimmschicht einen zusätzlichen Schutz der Behälterwand gegen Sauerstoffzutritt bietet.

Es können nahezu beliebige flüssige Speichermedien verwendet werden. Als ein Beispiel sei erwähnt, dass vorteilhaft Natriumacetat als flüssiges Speichermedium des Wärmespeichers verwendet werden kann. Dieses kann erstens eine vergleichsweise große Wärmemenge speichern, bei zweitens problemloser Verfügbarkeit und drittens geringen Beschaffungskosten. Die Korrosivität des Natriumacetats ergibt sich erst mit der zusätzlich vorhandenen Anwesenheit von Sauerstoff, so dass dort, wo das Natriumacetat dem korrosionsanfälligen Behältermaterial direkt anliegt, ohnehin keine Korrosion auftritt. In dieser Hinsicht muss daher kein besonderer Oberflächenschutz der Behälterwand vorgesehen werden.

## Patentansprüche

1. Wärmespeicher,
mit einem Behälter,
und einem in dem Behälter vorgesehenen, die Wärme speichernden, flüssigen Speichermedium,
wobei das Speichermedium den Behälter nur teilweise füllt,
**dadurch gekennzeichnet,**
**dass** der Behälter aus einem korrosionsanfälligen Material besteht,
und oberhalb des Speichermediums ein Fluidpolster vorgesehen ist,
dessen Fluid ein geringeres spezifisches Gewicht aufweist als das Speichermedium
und korrosionshemmende Eigenschaften aufweist.

2. Wärmespeicher nach Anspruch 1,
**dadurch gekennzeichnet,**
**dass** an den Behälter ein externer Überlaufbehälter angeschlossen ist.

3. Wärmespeicher nach Anspruch 1 oder 2,
**dadurch gekennzeichnet,**
**dass** das Fluid Öl enthält.

4. Wärmespeicher nach Anspruch 3,
**dadurch gekennzeichnet,**
**dass** das Fluid nur einen Teil des Behälters oberhalb des Speichermediums ausfüllt.

5. Wärmespeicher nach einem der vorhergehenden Ansprüche,
**dadurch gekennzeichnet,**
**dass** das Fluid ein sauerstoffarmes oder sauerstofffreies Gas enthält.

6. Wärmespeicher nach einem der vorhergehenden Ansprüche,
**gekennzeichnet durch**
Natriumacetat als Speichermedium.

## Geänderte Patentansprüche

### Geänderte Patentansprüche gemäss Regel 137(2) EPÜ.

**1.** Wärmespeicher,
mit einem Behälter,
und einem in dem Behälter vorgesehenen, die Wärme speichernden, Natriumacetat als flüssigem Speichermedium, welches die Korrosion des Behälters fördernde Eigenschaften aufweist,
wobei das Speichermedium den Behälter nur teilweise füllt, und oberhalb des Speichermediums ein Fluidpolster vorgesehen ist,
dessen Fluid ein geringeres spezifisches Gewicht aufweist als das Speichermedium,
wobei der Behälter aus einem korrosionsanfälligen Material besteht,
und das Fluidpolster korrosionshemmende Eigenschaften aufweist, indem es sauerstoffarm oder sauerstofffrei ist.

**2.** Wärmespeicher nach Anspruch 1,
**dadurch gekennzeichnet,**
**dass** an den Behälter ein externer Überlaufbehälter angeschlossen ist.

**3.** Wärmespeicher nach Anspruch 1 oder 2,
**dadurch gekennzeichnet,**
**dass** das Fluid Öl enthält.

**4.** Wärmespeicher nach Anspruch 3,
**dadurch gekennzeichnet,**
**dass** das Fluid nur einen Teil des Behälters oberhalb des Speichermediums ausfüllt.

**5.** Wärmespeicher nach einem der vorhergehenden Ansprüche,
**dadurch gekennzeichnet,**
**dass** das Fluid ein sauerstoffarmes oder sauerstofffreies Gas enthält.

**6.** Verwendung von Öl und / oder einem sauerstoffarmen oder sauerstofffreien Gas als Fluidpolster mit korrosionshemmenden Eigenschaften auf einem flüssigen Speichermedium in Form von Natriumacetat in einem Wärmespeicher, dessen Behälter aus einem korrosionsanfälligen Material besteht.
